# EUROPEAN PATENT APPLICATION

(11) **EP 4 465 174 A1**
(43) Date of publication of application: **20.11.2024**
(21) Application number: 23755821.8
(22) Date of filing: 15.02.2023
(51) Int. Cl.: G06F 9/455, G06F 8/65, G06F 8/61

(54) **APPLICATION DEPLOYMENT METHOD AND SYSTEM**

(30) Priority: 15.02.2022 CN 202210139276
(71) Applicant: Zhejiang Dahua Technology Co., Ltd., Hangzhou, Zhejiang 310053 (CN)
(72) Inventor: SHI, Liming, Hangzhou, Zhejiang 310053 (CN); GAO, Wei, Hangzhou, Zhejiang 310053 (CN); FAN, Zetian, Hangzhou, Zhejiang 310053 (CN)
(74) Representative: Wang, Bo
(86) International application number: PCT/CN2023/076287
(87) International publication number: WO 2023/155819

(57) **Abstract**

Embodiments of the present description provide an application deployment method and system. The method comprises: obtaining a first application packet to be deployed; determining a first dependency relationship described in the first application packet, wherein the first dependency relationship indicates one or more second application packets that the first application packet depends on; and deploying the one or more second application packets and the first application packet according to the first dependency relationship.

## Description

### CROSS REFERENCE TO RELATED APPLICATIONS

This application claims priority to Chinese Patent Application No. 202210139276.2, filed on February 15, 2022, the entire contents of which are incorporated herein by reference.

### TECHNICAL FIELD

The present disclosure relates to the field of information technology, and more particularly, relates to methods and systems for application deployment.

### BACKGROUND

A packet management tool is a tool for application developers to manage application packets. For example, Helm is a packet management tool in a Kubernetes (also referred to as K8s) environment. With the help of the packet management tool, the application developers can release and maintain applications. Based on modular program development concept, an application program can include multiple sub-programs. That is, an application packet (also referred to as a primary application packet) can include multiple sub-application packets. The deployment of these application packets can have dependency relationships. For example, the deployment of an application packet A requires parameters of an application packet B, and the deployment of the application packet B requires parameters of an application packet C.

At present, some packet management tools only support independent deployment of application packets. When the application developers release an application with the dependency relationship, a deployment order of relevant application packets needs to be managed manually. Especially when a large number of sub-application packets have dependency relationships, the cost of manual management is high and the efficiency of the application deployment is low.

Therefore, it is desirable to provide low-cost and efficient methods for application deployment.

### SUMMARY

Some embodiments of the present disclosure provide a method for application deployment. The method may include obtaining a first application packet to be deployed; determining a first dependency relationship described in the first application packet, wherein the first dependency relationship indicates one or more second application packets that the first application packet depends on; and deploying the one or more second application packets and the first application packet according to the first dependency relationship.

Some embodiments of the present disclosure provide a system for application deployment. The system may include an acquisition module, a determination module, and a deployment module. The acquisition module may be configured to obtain a first application packet to be deployed. The determination module may be configured to determine a first dependency relationship described in the first application packet. The first dependency relationship indicates one or more second application packets that the first application packet depends on. The deployment module may be configured to deploy the one or more second application packets and the first application packet according to the first dependency relationship.

Some embodiments of the present disclosure provide a device for application deployment. The device may include a processor. The processor may be configured to execute the method for application deployment as described in any one embodiment of the present disclosure.

Some embodiments of the present disclosure provide a non-transitory computer-readable storage medium. The non-transitory computer-readable storage medium may include computer instructions that, when read by a computer, may direct the computer to execute the method for application deployment as described in any one embodiment of the present disclosure.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an application scenario of a software management system according to some embodiments of the present disclosure;
FIG. 2 is a block diagram illustrating an exemplary system for application deployment according to some embodiments of the present disclosure;
FIG. 3 is a flowchart illustrating an exemplary process for application deployment according to some embodiments of the present disclosure;
FIG. 4 is a schematic diagram illustrating a first dependency relationship according to some embodiments of the present disclosure;
FIG. 5 is a schematic diagram illustrating an exemplary process for deploying application packets in batches according to the first dependency relationship shown in FIG. 4;
FIG. 6 is a flowchart illustrating an exemplary process for application deployment implemented in a K8s environment according to some embodiments of the present disclosure;
FIG. 7 is a field table of a HelmRequest object according to some embodiments of the present disclosure;
FIG. 8 is a field table of a release object according to some embodiments of the present disclosure; and
FIG. 9 is a field table of a task object according to some embodiments of the present disclosure.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for a person of ordinary skill in the art to apply the present disclosure to other similar scenarios in accordance with these drawings without creative labor. Unless obviously obtained from the context or the context illustrates otherwise, the same numeral in the drawings refers to the same structure or operation.

It should be understood that the terms "system," "device," "unit," and/or "module" used herein are a way to distinguish between different components, elements, parts, sections, or assemblies at different levels. However, the terms may be replaced by other expressions if other words accomplish the same purpose.

As shown in the present disclosure and in the claims, unless the context clearly suggests an exception, the words "one," "a," "an," "one kind," and/or "the" do not refer specifically to the singular, but may also include the plural. Generally, the terms "including" and "comprising" suggest only the inclusion of clearly identified steps and elements, however, the steps and elements that do not constitute an exclusive list, and the method or apparatus may also include other steps or elements.

Flowcharts are used in the present disclosure to illustrate the operations performed by a system according to embodiments of the present disclosure, and the related descriptions are provided to aid in a better understanding of the magnetic resonance imaging method and/or system. It should be appreciated that the preceding or following operations are not necessarily performed in an exact sequence. Instead, steps can be processed in reverse order or simultaneously. Also, it is possible to add other operations to these processes or to remove a step or steps from these processes.

In the present disclosure, the terms "deploy" and "install" are used interchangeably, and the terms "delete" and "uninstall" are used interchangeably.

Kubernetes (also referred to as K8s) is a distributed architecture solution based on container technologies. In some embodiments, the methods and the systems for application deployment according to some embodiments of the present disclosure are suitable for improving a native Helm architecture of K8s, so as to solve the problems (e.g., long release time, high maintenance cost, etc., of products (application packets) requiring manual management) in the native Helm architecture. It should be noted that the present disclosure does not exclude the possibility that the methods and systems are configured for improving other objects. For example, the methods and systems are configured for improving any known or future proposed Helm-like architecture.

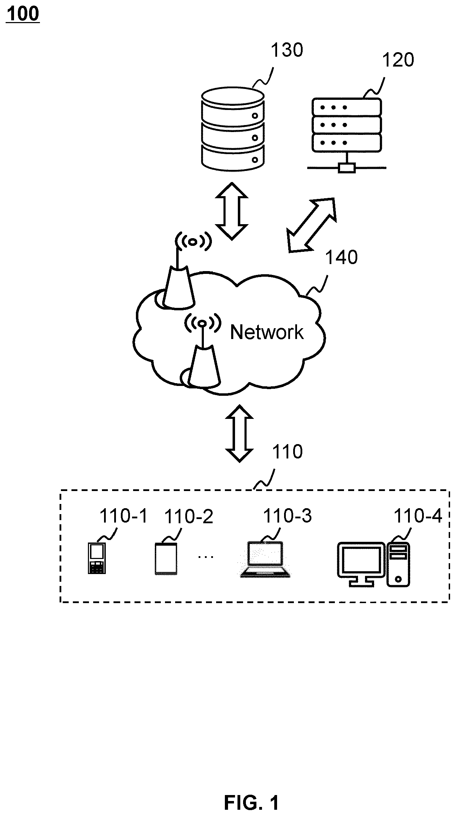

FIG. 1 is a schematic diagram illustrating an application scenario of a software management system 100 according to some embodiments of the present disclosure. The system 100 may include a user terminal 110, a server terminal 120, a database 130, and a network 140. The user terminal 110 may be installed with a packet management tool (e.g., Helm).

The user terminal 110 may be configured to initiate a service request to the server terminal 120, such as to initiate an application-related service request via the packet management tool. In some embodiments, the service request may include at least one of an application deployment request, an application deletion request, an application offline and online request, a query request, etc. The deployment refers to a release of an initial version, a version upgrade, or a version rollback.

Files (e.g., resources and configurations) required for deploying an application program may be packaged into a directory, which is referred to as an application packet. The directory may be also referred to as a data packet, a file packet, a program packet, a software packet, etc., or be referred to as a packet for short. For example, in a K8s environment, the application packet may be a directory named "charts/," which is referred to as a chart (packet). A chart (also referred to as a primary chart) may include multiple sub-charts.

In the K8s architecture, the application program may run in a container environment. Each container may be regarded as an application box that packages a simplified system environment (including a root user permission, a process space, a user space, and a network space) and application programs running in the simplified system environment. Containers may be generated based on (container) mirror images. In the K8s architecture, a group of containers (including one or more containers) may be regarded as a logical unit (denoted as Pod) to achieve the goal of refined management of business services and minimal self-complete delivery.

In some embodiments, the packet management tool may include a visual interface to facilitate user operation and/or viewing relevant information. For example, a user may initiate various service requests via the visual interface. As another example, the user terminal 110 may display a real-time state of an application instance (e.g. a release object) via the visual interface.

The user terminal 110 may include various devices with input/output functions, such as a smart phone 110-1, a tablet computer 110-2, a laptop computer 110-3, a desktop computer 110-4, etc.

The server terminal 120 may be configured to process the service request from the user terminal 110. In some embodiments, in response to the application deployment request of the user, the server terminal 120 may deploy the application program of a target version. The target version refers to an initial version, an upgrade version, or a historical (rollback) version. Each time an application packet (e.g. a chart) is deployed (installed), the server terminal 120 may create an instance of the application program (also referred to as an application instance), such as creating a release object.

In some embodiments, the server terminal 120 may include a container cloud platform capable of supporting K8s. The present disclosure improves the native application deployment logic of K8s. After a deployment request of the application program (e.g., Software-as-a-Service (Saas)) is received, the container cloud platform may determine a deployment strategy based on a dependency relationship described in the primary chart of the application program. The deployment strategy specifies all charts that need to be deployed (the primary chart and sub-charts thereof) and a deployment order of all the charts. Furthermore, the container cloud platform may deploy all the charts in a container group (Pod) according to the determined deployment strategy. It should be noted that the improvements of the present disclosure are intended to solve the problems of the application orchestration. Application orchestration is decoupled from a container level, which means that the improvements of the present disclosure can also be applied to a non-containerized platform.

In some embodiments, in response to an application deletion request of the user, the server terminal 120 may delete the application instance, such as delete the release object.

In some embodiments, in response to an application offline and online request of the user, the server terminal 120 may offline and then online the application instance. In some embodiments, an offline and online operation may be performed by stopping and then resuming the service. In this case, the application instance may still be retained. In some embodiments, the offline and online operation may be achieved by deleting the application instance and re-deploying the application (generating a new application instance).

In some embodiments, in response to a query request of the user, the server terminal 120 may return a query result, such as the chart packet and relevant information, to the user.

In some embodiments, the server terminal 120 may be an independent server or a server group. The server group may be centralized or distributed. In some embodiments, the server may be local or remote. In some embodiments, the server may be implemented on a cloud platform. For example, the cloud platform may include a private cloud, a public cloud, a hybrid cloud, a community cloud, a decentralized cloud, an internal cloud, or the like, or any combination thereof.

The database 130 may be configured to store data and/or information in the software management system 100. In some embodiments, the database 130 may be configured to store the application packets in the software management system 100 so as to realize sharing and reuse of the application packets. It can be understood that each application packet may be regarded as a module, and any developer may upload an application packet for other users to use via the user terminal 110, and may also obtain application packets developed by other developers via the user terminal 110 as sub-application packets of the application packet to be developed by the developer.

The database 130 may be a relational database or a non-relational database.

The network 140 may be configured to connect components of the system 100, such that the components may communicate with each other. The network 140 between the components of the system 100 may include a wired network and/or a wireless network. For example, the network 140 may include a cable network, a wired network, a fiber optic network, a telecommunications network, an internal network, the Internet, a local area network (LAN), a wide area network (WAN), a wireless local area network (WLAN), a metropolitan area network (MAN), a public switched telephone network (PSTN), a Bluetooth network , a ZigBee network (ZigBee), a near field communication (NFC), an in-device bus, an in-device line, a cable connection, or the like, or any combination thereof. The network connection between every two of the components may be in one or more of the above manners.

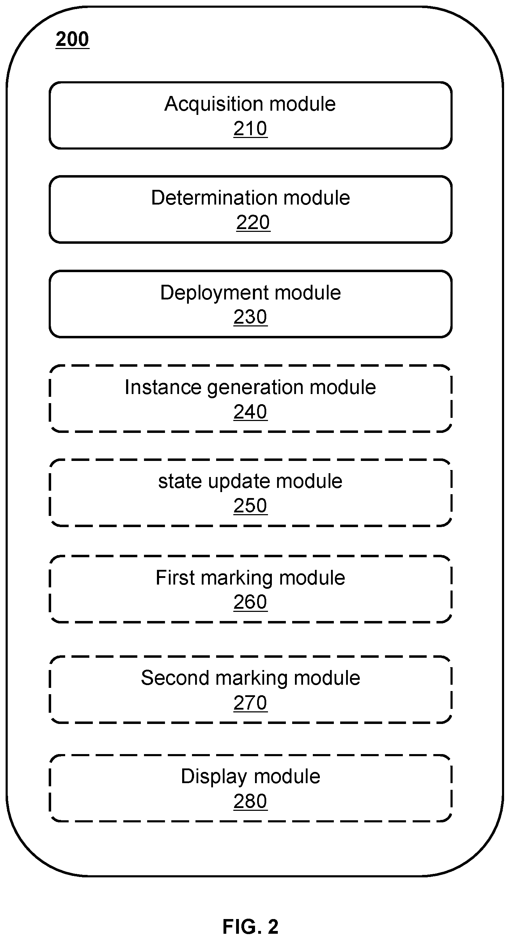

FIG. 2 is a block diagram illustrating an exemplary system 200 for application deployment according to some embodiments of the present disclosure. In some embodiments, the system 200 for application deployment may be implemented in the software management system 100. As shown in FIG. 2, the system 200 for application deployment may include an acquisition module 210, a determination module 220, and a deployment module 230.

The acquisition module 210 may be configured to obtain a first application packet to be deployed. In some embodiments, in response to an application deployment request initiated by a user, the acquisition module 210 may obtain the first application packet.

The determination module 220 may be configured to determine a first dependency relationship described in the first application packet. The first dependency relationship indicates one or more second application packets that the first application packet depends on.

The deployment module 230 may be configured to deploy the one or more second application packets and the first application packet according to the first dependency relationship. In some embodiments, the deployment module 230 may create a plurality of deployment tasks. Each of the plurality of deployment tasks may correspond to each of the one or more second application packets and the first application packet. Furthermore, the deployment module 230 may perform the plurality of deployment tasks according to the first dependency relationship.

In some embodiments, the system 200 for application deployment may be configured for deploying an initial version or an upgrade version of the first application packet, or rolling back the first application packet to a historical version. The system 200 for application deployment may also include an instance generation module 240. The instance generation module 240 may be configured to generate an instance of the first application packet before the plurality of deployment tasks are created. The instance may include at least one version change record of the first application packet.

In some embodiments, the instance may further include a state of the instance. The system 200 for application deployment may further include a state update module 250. The state update module 250 may be configured to monitor state change messages of the plurality of deployment tasks; in response to monitoring at least one state change message of one or more of the plurality of deployment tasks, update the state of the instance. The state of the instance may indicate whether the plurality deployment tasks have been completed.

In some embodiments, the system 200 for application deployment may further include a first labeling module 260. The first labeling module 260 may be configured to set labels of the resources associated with the one or more template files as labels of the application deployment request, so as to facilitate query.

In some embodiments, each of the plurality of deployment tasks may include one or more template files configured with parameters, and each of the one or more template files may be associated with resources, and the state change message of each of the plurality of deployment tasks may be generated by: monitoring state change messages of the resources associated with the one or more template files corresponding to the deployment task; in response to monitoring at least one state change message of one or more of the resources associated with the one or more template files, generating the state change message of the deployment task, the state of the deployment task indicating whether the resources associated with the one or more template files are ready.

In some embodiments, the system 200 for application deployment may further include a second labeling module 270. The second labeling module 270 may be configured to set labels of the plurality of deployment tasks as labels of the application deployment request, so as to facilitate query.

In some embodiments, the system 200 for application deployment may further include a display module 280. The display module 280 may be configured to display the state of the instance to the user.

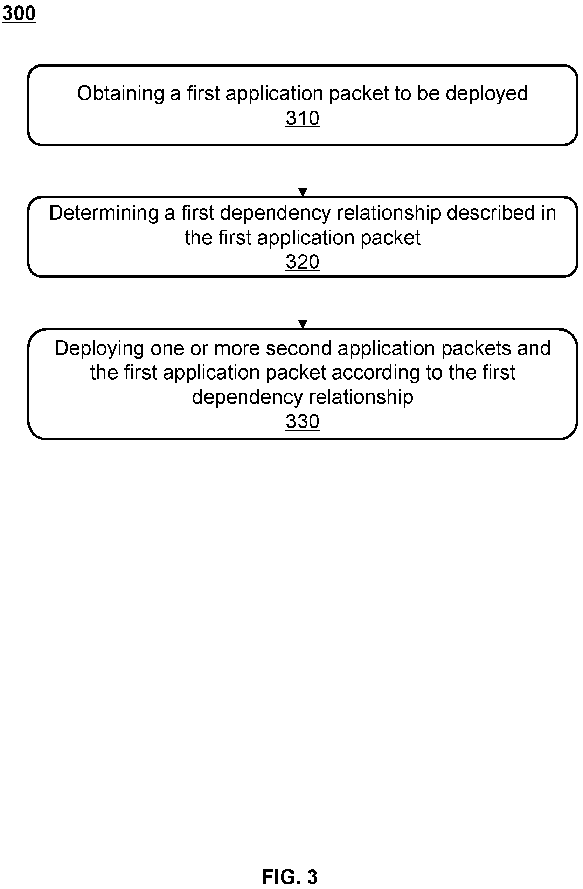

More descriptions regarding the system 200 for application deployment and the modules thereof may be found in FIG. 3 and relevant descriptions thereof.

It should be noted that the above description of the system 200 and the modules thereof are provided for the purposes of illustration, and are not intended to limit the scope of the present disclosure. It is understood that for those skilled in the art, after understanding the principle of the system 200, it is possible to arbitrarily combine the modules or form a subsystem connected with other modules without deviating from the principle. For example, in some embodiments, the database 130 may be integrated into the server terminal 120. As another example, in some embodiments, the determination module 220 and the deployment module 230 may be combined into one module. Such variations are all within the scope of protection of the present disclosure.

FIG. 3 is a flowchart illustrating an exemplary process 300 for application deployment according to some embodiments of the present disclosure. As shown in FIG. 3, the process 300 may include following operations. In some embodiments, the process 300 may be performed by the system management system 100. For instance, the process 300 may be performed by the system 200 for application deployment implemented in the software management system 100. In some embodiments, the process 300 may be triggered by an application deployment request initiated by a user. That is, in response to that the application deployment request from the user is received, the system 200 for application deployment may perform the process 300.

In 310, a first application packet to be deployed may be obtained.

The first application packet may be provided by the user (e.g., a developer). For instance, the user may initiate an application deployment request (e.g., a HelmRequest object). The application deployment request may include deployment information of the first application packet, such as an address, a version, parameter configuration information, an operation type (e.g., initial version installation, version upgrade, version rollback, uninstallation, offline and online, etc.), etc., of the first application packet.

More descriptions regarding the first application packet may be found elsewhere in the present disclosure (e.g., FIG. 1 and the descriptions thereof).

In 320, a first dependency relationship described in the first application packet may be determined. The first dependency relationship may indicate one or more second application packets that the first application packet depends on.

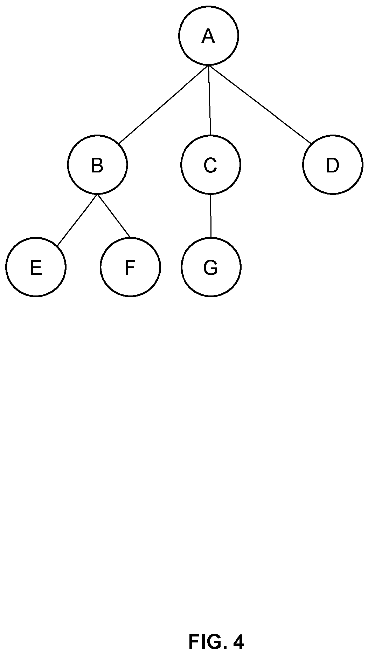

The first application packet and any one of the one or more second application packets may have a direct dependency relationship or an indirect dependency relationship. In some embodiments, the first application packet may depend on a plurality of second application packets. The first dependency relationship may also include a second dependency relationship between the plurality of second application packets. Merely by way of example, the first dependency relationship may be as shown in FIG. 4. A circle A represents a first application packet, and circles B-G represent a plurality of second application packets that the first application packet depends on. For instance, the circle A depends on the circles B, C, and D, the circle B depends on the circles E and F, and the circle C depends on the circle G.

In 330, the one or more second application packets and the first application packet may be deployed according to the first dependency relationship.

A system (e.g., the system 200 for application deployment) may automatically control a deployment order of a target application (the first application packet) and sub-applications (the second application packets) thereof according to the dependency relationship, which can not only save the cost of manual management, but also improve the efficiency of the application deployment.

In some embodiments, the deployment module 230 may create a plurality of deployment tasks (e.g., task objects). Each of the plurality of deployment tasks may correspond to each of the one or more second application packets and the first application packet. It is understood that a deployment task corresponding to any application packet may be configured for deploying the application packet. Furthermore, the deployment module 230 may perform the plurality of deployment tasks according to the first dependency relationship. For example, referring to FIG. 4, the deployment module 230 may create six deployment tasks. Each of the six deployment tasks may correspond to each of the second application packets B-G and the first application packet A. Furthermore, the deployment module 230 may perform these tasks in three batches. The application packets D, E, F and G corresponding to a first batch of tasks may not depend on other application packets. The application packets B and C corresponding to a second batch of tasks may depend on the application packets E, F and G corresponding to the first batch of tasks. The application packet corresponding to a last batch (a third batch) of tasks may be the first application packet A.

In some embodiments, the process 300 may be configured for deploying an initial version or an upgrade version of the first application packet, or rolling back the first application packet to the second application packet. Before the plurality of deployment tasks are created, the instance generation module 240 may generate an instance (e.g., a release object) of the first application packet. The instance may include at least one version change record of the first application packet, such as first deployment time, last deployment time, delete time, a current version, etc., of the first application packet.

In some embodiments, the instance may further include a state (i.e., an application state) of the instance. The state update module 250 may maintain the state of the instance by monitoring state change messages of the plurality of deployment tasks, such that the user may obtain a real-time state of the first application packet after deployment. For instance, the state update module 250 may monitor the state change messages of the plurality of deployment tasks. In response to monitoring at least one state change message of one or more of the plurality of deployment tasks, the state update module 250 may update the state of the instance. The state of the instance may indicate whether the plurality of deployment tasks have been completed. It is understood that if the plurality of deployment tasks have been completed, the state of the instance has been deployed. Merely by way of example, the application state may be deploying, deployed, offline, or deleted.

In some embodiments, the process 300 may further include displaying the state of the instance to the user.

In some embodiments, each of the plurality of deployment tasks (e.g., a task object) may include one or more template files (e.g., results of parameter configuration on yaml files in the templates/directory) configured with parameters. Each of the one or more template files may be associated with resources. The resources refer to service(s) used to implement a specific function. The state change message of each of the plurality of deployment tasks may be generated by monitoring state change messages of the resources associated with the one or more template files corresponding to the deployment task; in response to monitoring at least one state change message of one or more of the resources associated with the one or more template files, generating the state change message of the deployment task. The state of the deployment task may indicate whether the resources associated with the one or more template files are ready. It can be understood that for any deployment task, if the resources associated with the one or more template files are ready, the state of the task may be completed.

In some embodiments, each of the plurality of deployment tasks (e.g., the task object) may include an application packet (e.g., a chart packet) corresponding to the deployment task, a template file (e.g., the yaml file) configured with parameters corresponding to the application packet, and an upstream task and/or a downstream task of the deployment task. The upstream task refers to a deployment task corresponding to another application packet that the application packet directly depends on. The downstream task refers to a deployment task corresponding to another application packet that directly depends on the application packet. For example, referring to FIG. 4, since the application packet B directly depends on the application packets E and F and an application packet A directly depends on the application packet B, an upstream task of a deployment task (also referred to as a task_B) corresponding to the application packet B may include deployment tasks (also referred to as a task_E and a task_F) corresponding to the application packets E and F, respectively, and a downstream task of the task_B may include a deployment task (also referred to as a task_A) corresponding to the application packet A. Accordingly, for any deployment task, the deployment module 230 may perform a dependency verification on the deployment task. The dependency verification may include determining whether the upstream task(s) of the deployment task have been completed. It can be understood that when the upstream task(s) of the deployment task have been completed, the dependency verification of the deployment task passes. When the deployment task passes the dependency verification, the deployment module 230 may perform the deployment task. Otherwise, the deployment module 230 may re-perform the dependency verification on the deployment task.

In some embodiments, the process 300 may further include setting labels of the plurality of deployment tasks (corresponding to the application deployment request) as labels of the application deployment request, so as to facilitate query. Similarly, the process 300 may further include setting labels of the resources associated with the one or more template files (e.g., the yaml file) as labels of the application deployment request, so as to facilitate the query. The user may clarify association relationships among the application deployment request, the application instance, and the plurality of deployment tasks (e.g., HelmRequest, release, and task) using the labels, i.e., clarify which task(s) are associated with which application instance, and clarify which application instance is associated with which application deployment request.

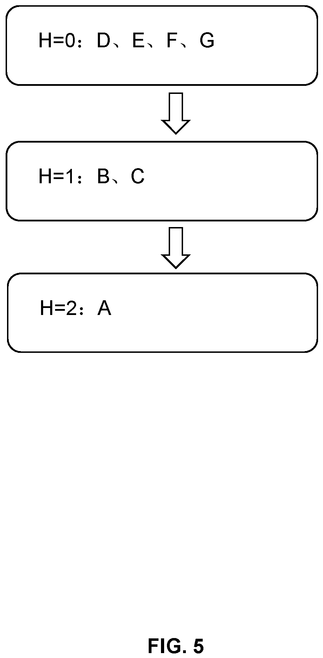

In some embodiments, the deployment module 230 may determine a degree of dependency of each second application packet based on the first dependency relationship, and then deploy the plurality of second application packets in batches according to the degree of dependency of each second application packet. In addition, a plurality of application packets in a same batch may be deployed in parallel. The degree of dependency (denoted as H) of any application packet may be determined by a maximum level of sub-application packets that the application packet depends on. For example, referring to FIG. 4, the application packet A may depend on at most two levels of sub-application packets, and accordingly, the degree of dependency of the application packet A may be equal to 2. Each of the application packets B and C depend on at most one level of sub-application packets, and accordingly, the degree of dependency of each of the application packets B and C may be equal to 1. Each of the application packets D, E, F, and G may depend on no sub-application packet, and accordingly, the degree of dependency of each of the application packets D, E, F, and G may also be qual to 0. Furthermore, application packets with low degrees of dependency may be preferentially deployed. For example, referring to FIG. 5, the application packets A-G may be deployed in three batches according to a size of the degree of dependency H. In a first batch, the application packets D, E, F, and G may be deployed in parallel. In a second batch, the application packets B and C may be deployed in parallel. In a third batch, the application packet A may be deployed.

In some embodiments, the first dependency relationship may be converted into a tree structure. Accordingly, the degrees of dependency may be equivalent to heights of tree nodes. A height of any node may reflect a maximum path length from the node to a leaf node. For example, if a height of the leaf node is 0, a height of a root node A in FIG. 4 may be 2. For instance, the deployment module 230 may convert the first dependency relationship into the tree structure and group nodes according to the heights of the nodes in the tree structure. Furthermore, the deployment module 230 may deploy the application packets represented by each group of nodes in sequence. Referring to FIG. 4, the root node (e.g., the application packet A) represents the first application packet, and remaining nodes (e.g., the application packets B-G) represent the second application packets. A child node (e.g., the application packet E) of any non-leaf node (e.g., the application packet B) may be another application packet that an application packet represented by the non-leaf node depends on. It can be understood that the nodes in the same group may have a same height. In addition, for each group including a plurality of nodes, the deployment module 230 may deploy a plurality of application packets represented by the plurality of nodes in parallel, and deploy preferentially application packets represented by a group with a relatively small node height. For example, referring to FIG. 5, the application packets A-G may be deployed in the three batches according to a size of the node height H. In the first batch, the application packets D, E, F, and G may be deployed in parallel. In the second batch, the application packets B and C may be deployed in parallel. In the third batch, the application packet A may be deployed.

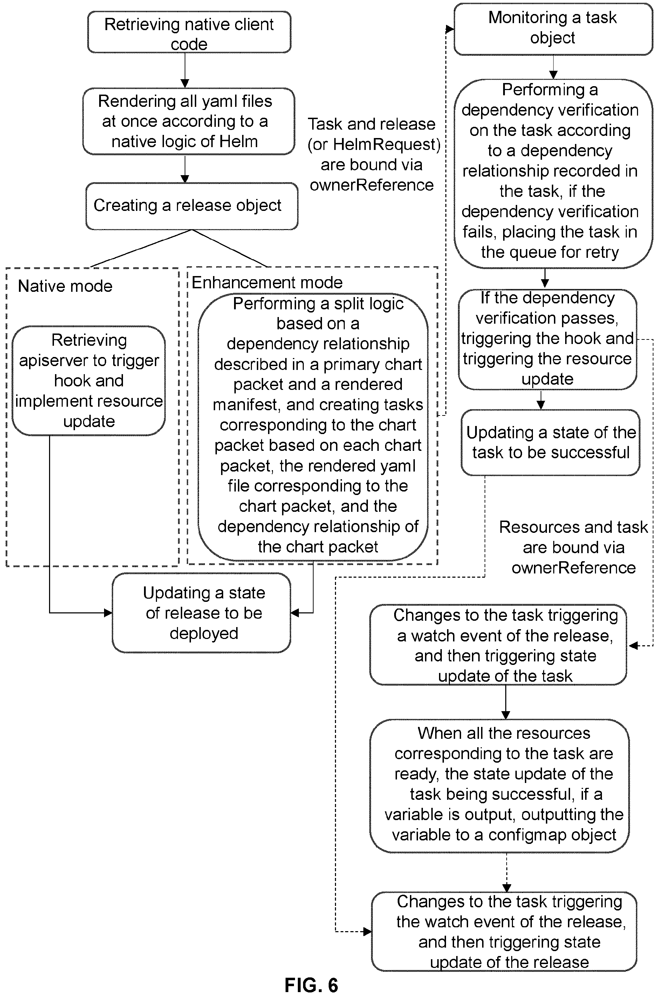

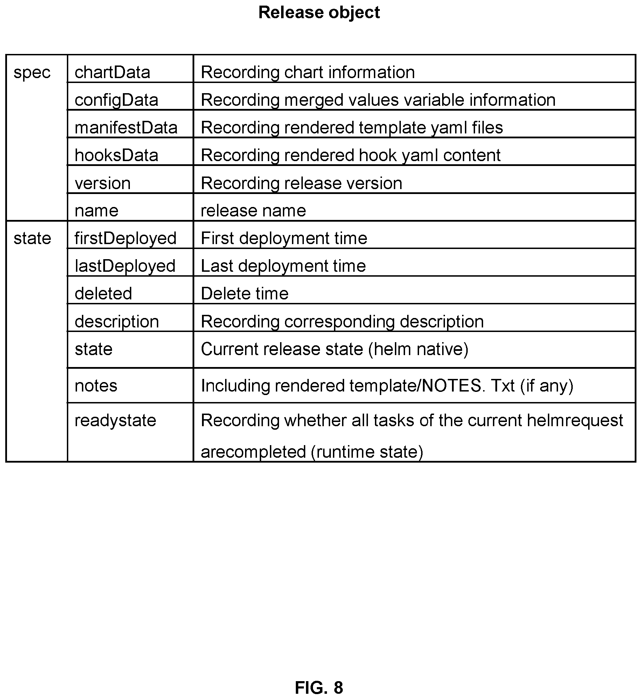

In some embodiments, the method for application deployment provided according to some embodiments of the present disclosure may be applied to a Kubernetes (K8s) platform, which is described in detail below with reference to FIGs. 6-9.

In a user terminal (kubeclient), two deployment modes, a native mode (corresponding to a left branch in FIG. 6) and an enhancement mode (corresponding to a right branch in FIG. 6), may be provided. In the native mode, dependency relationship(s) between charts may not be considered when the charts are deployed. In the enhancement mode, a deployment order of the charts may be controlled according to the dependency relationship(s) between the charts. More descriptions regarding the deployment may be found in the process 300. In order to introduce the enhancement mode, a custom kubeclient may be implemented . The custom kubeclient may be compatible with functions of the native kubeclient to support the native mode.

As shown in FIG. 6, after the user initiates an application deployment request (the HelmRequest object), the system may retrieve a native client code to render all yaml files (these yaml files may be packaged into a manifest) at once according to a native logic of Helm. These yaml files may be obtained in a following manner: using values.yaml files (i.e. parameter configuration files) in a chart packet to be deployed (donated as a chart_A) to perform parameter configuration (i.e. rendering, also referred to as incremental modification or merging) on the yaml files in the templates/directory of the chart_A.

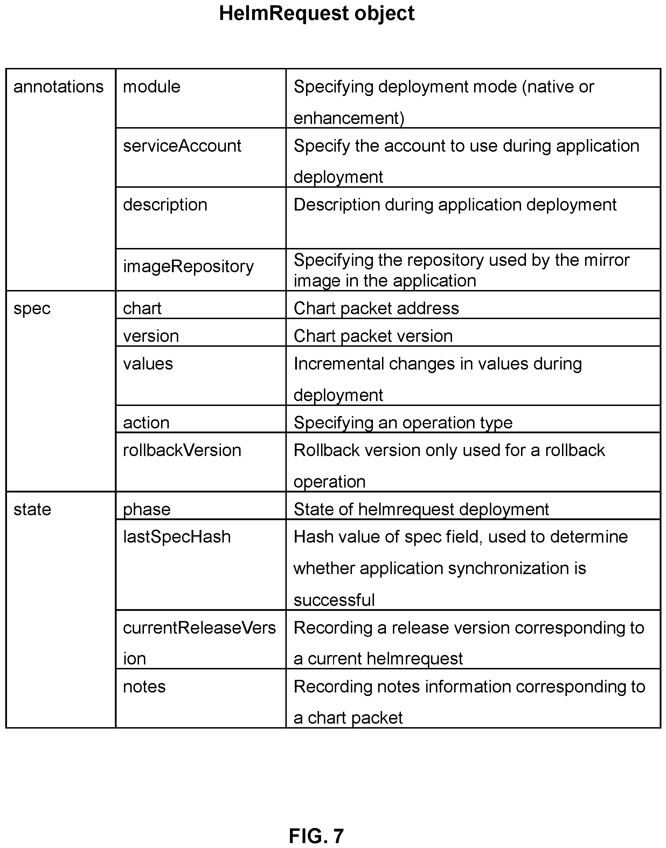

Then, the system may create a release object and determine a deployment mode (manner) based on a module field of the HelmRequest object. More descriptions regarding field composition and field explanation of the HelmRequest object and the release object may be found in FIGs. 7-8.

In the native mode, the system may retrieve apiserver (a server interface) to trigger hooks (a system mechanism) and implement resource update. For instance, the initial installation, upgrade, and deletion of the chart packet may be implemented by retrieving the native client code. For an offline and online operation, an offline operation may be implemented by setting a client parameter "KeepHistory=false." The offline operation may not retain the release object. An online operation may be implemented by setting a client parameter "Replace=true." A rollback operation may be implemented by specifying a version to be rolled back in a helmrequest.spec.rollbackVersion field of the HelmRequest object and retrieving the native client code. In this case, spec.values may be cleared to avoid subsequent ambiguity.

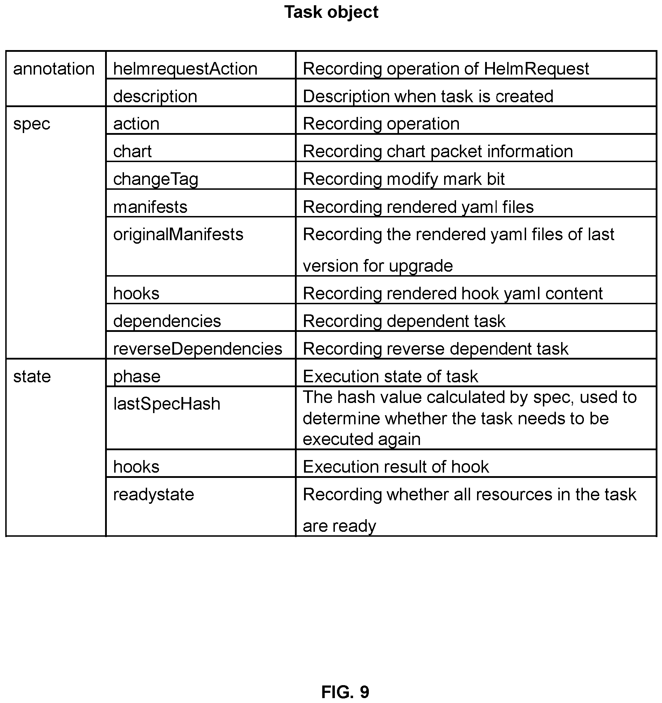

In the enhancement mode, for the initial installation of an application, the system may perform a split logic based on the dependency relationship described in a primary chart packet and the rendered manifest, and create tasks corresponding to the chart packet based on each chart packet (the primary chart packet or the sub-chart packet), the rendered yaml file corresponding to the chart packet, and the dependency relationship (indicating other chart packets that the chart packet directly depends on and/or other chart packets that directly depend on the chart packet) of the chart packet. If the chart packet defines an input/output, the task needs to record the input/output accordingly. By setting ownerReference (used to indicate a subordinate relationship between objects) of the created task object to a current release object (or the HelmRequest object), a state change of the task may trigger a watch event of the release, such that the state change of the task may trigger the state update of the release (or the HelmRequest). More descriptions regarding the field composition and field explanation of the task object may be found in FIG. 9.

In the enhancement mode, for the version upgrade of the application, the system may generate a new task list based on new yaml files and chart packet information. The system may query an old task list from cache, and compare the new and old task manifests, such as by task names. For any task, if the task appears in the new task list but not in the old task list, an action field of the task may be set to "install." If the task appears in the new and old task lists, the action field of the task may be set to "upgrade." If the task appears in the old task manifest but not in the new task manifest, the action field of the task may be set to "delete." During the upgrade, the system may set a helmrequestAction field in an annotation of the task object to "upgrade."

In the enhancement mode, a version rollback logic of the application may be substantially the same as a version upgrade logic. It should be noted that when the version rollback is performed, the system may load the yam file and the chart packet information of the historical version rolled back from the release of the specified version.

In the enhancement mode, the deletion of the application may be include a normal deletion (delete) and a forced deletion (forceDelete). Compared with the normal deletion, the forced deletion may ignore a system error. When an application is deleted, the system may update the action fields of all related tasks to "delete" or "forceDelete."

In the enhancement mode, when an application is taken offline and then put online again, the system may update the action fields of all related tasks to "uninstall" when the application is taken offline, and then change the action fields to "install" when the application is put online.

The task processing logic in the enhancement mode is described in detail below.

As shown in FIG. 6, the system may monitor a task object (based on a List-Watch mechanism). In response to monitoring that a change message of the task object, the system may perform a corresponding operation according to an action field in the task object. For instance, when the action field is "install," the system may deploy a yaml file in spec.manifest to K8s, determine which type of hook to trigger according to a helmrequestAction field in an annotation, set ownerReference of resources (e.g., services) associated with the yaml file in the spec.manifest to "task," and set resource labels to a label of HelmRequest, so as to facilitate query. When the action field is "upgrade" (both the version upgrade and the version rollback of the application trigger upgrade for the task), the system may compare the yaml files in the old and new lists to update resources (e.g., adding, deleting, and modifying the resources), determine which type of hook to trigger based on the helmrequestAction field in the annotation, set the ownerReference of the resources (e.g., the services) associated with the yaml files in the spec.manifest to "task," and set the resource labels to the label of HelmRequest, so as to facilitate query. When the action field is "delete," the system may delete the resources associated with the yaml files in the manifest and trigger the hook.

In the enhancement mode, the system may perform a dependency verification on the task according to a dependency relationship recorded in the task. If the dependency verification fails, the task may be placed in the queue for retry (the dependency verification is reperformed on the task). If the deployment task passes the dependency verification, the hook may be triggered and the resource update (e.g., adding, updating, and deleting resources) may be triggered.

It should be noted that since the ownerReference of the resources is set to "task," changes to the resources may trigger the watch event of the task. When the change message of any resource is monitored, the system may dynamically update the state (e.g., a readyState field) of the task according to the states of all the resources (corresponding to a same task). For example, when all the resources corresponding to the task are ready, the state of the task may be updated to completed (also referred to as successful or deployed). In addition, when the readyState field of the task changes to completed and the action field is "install/upgrade," the system needs to process the output. For example, the system may output a variable to a configmap object. Similarly, since the ownerReference of the task is set to "release," changes to the task may trigger the watch event of the release. When the change message of any task is monitored, the system may dynamically update the state of the release (e.g., the readyState field) according to the states of all the tasks (corresponding to a same release). For example, when all the tasks corresponding to the release are deployed, the state of the release may be updated to deployed.

It should be noted that the above descriptions of the relevant process are provided for the purposes of illustration, and are not intended to limit the scope of the present disclosure. For those skilled in the art, various modifications and changes can be made to the process under the guidance of the present disclosure. However, these modifications and changes are still within the scope of the present disclosure. For example, in some embodiments, the labeling (label setting) operation may be omitted.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure and are within the spirit and scope of the exemplary embodiments of this disclosure.

Moreover, certain terminology has been used to describe embodiments of the present disclosure. For example, the terms "one embodiment," "an embodiment," and "some embodiments" mean that a particular feature, structure, or feature described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or features may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose and that the appended claims are not limited to the disclosed embodiments, but, on the contrary, are intended to cover modifications and equivalent arrangements that are within the spirit and scope of the disclosed embodiments. For example, although the implementation of various parts described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, numbers describing the number of ingredients and attributes are used. It should be understood that such numbers used for the description of the embodiments use the modifier "about," "approximately," or "substantially" in some examples. Unless otherwise stated, "about," "approximately," or "substantially" indicates that the number is allowed to vary by ±20%. Correspondingly, in some embodiments, the numerical parameters used in the description and claims are approximate values, and the approximate values may be changed according to the required features of individual embodiments. In some embodiments, the numerical parameters should consider the prescribed effective digits and adopt the method of general digit retention. Although the numerical ranges and parameters used to confirm the breadth of the range in some embodiments of the present disclosure are approximate values, in specific embodiments, settings of such numerical values are as accurate as possible within a feasible range.

For each patent, patent application, patent application publication, or other materials cited in the present disclosure, such as articles, books, specifications, publications, documents, or the like, the entire contents of which are hereby incorporated into the present disclosure as a reference.
The application history documents that are inconsistent or conflict with the content of the present disclosure are excluded, and the documents that restrict the broadest scope of the claims of the present disclosure (currently or later attached to the present disclosure) are also excluded. It should be noted that if there is any inconsistency or conflict between the description, definition, and/or use of terms in the auxiliary materials of the present disclosure and the content of the present disclosure, the description, definition, and/or use of terms in the present disclosure is subject to the present disclosure.

Finally, it should be understood that the embodiments described in the present disclosure are only used to illustrate the principles of the embodiments of the present disclosure. Other variations may also fall within the scope of the present disclosure. Therefore, as an example and not a limitation, alternative configurations of the embodiments of the present disclosure may be regarded as consistent with the teaching of the present disclosure. Accordingly, the embodiments of the present disclosure are not limited to the embodiments introduced and described in the present disclosure explicitly.

## Claims

1. A method for application deployment, comprising:
obtaining a first application packet to be deployed;
determining a first dependency relationship described in the first application packet, wherein the first dependency relationship indicates one or more second application packets that the first application packet depends on; and
deploying the one or more second application packets and the first application packet according to the first dependency relationship.

2. The method of claim 1, wherein the method is triggered by an application deployment request initiated by a user; and
the deploying the one or more second application packets and the first application packet according to the first dependency relationship includes:
creating a plurality of deployment tasks, wherein each of the plurality of deployment tasks corresponds to each of the one or more second application packets and the first application packet; and
performing the plurality of deployment tasks according to the first dependency relationship.

3. The method of claim 2, wherein the method is configured for deploying an initial version or an upgraded version of the first application packet, or rolling back the first application packet to a historical version; and
before the plurality of deployment tasks are created, the method further includes:
generating an instance of the first application packet, the instance including at least one version change record of the first application packet.

4. The method of claim 3, wherein the instance further includes a state of the instance; and
the method further includes:
monitoring state change messages of the plurality of deployment tasks;
in response to monitoring at least one state change message of one or more of the plurality of deployment tasks, updating the state of the instance, the state of the instance indicating whether the plurality of deployment tasks have been completed.

5. The method of claim 4, wherein each of the plurality of deployment tasks includes one or more template files configured with parameters, each of the one or more template files is associated with resources, and the state change message of each of the plurality of deployment tasks is generated by:
monitoring state change messages of the resources associated with the one or more template files corresponding to the deployment task;
in response to monitoring at least one state change message of one or more of the resources associated with the one or more template files, generating the state change message of the deployment task, the state of the deployment task indicating whether the resources associated with the one or more template files are ready.

6. The method of claim 5, wherein each of the plurality of deployment tasks includes an application packet corresponding to the deployment task, a template file configured with parameters corresponding to the application packet, and at least one of an upstream task or a downstream task of the deployment task, wherein
the upstream task is a deployment task corresponding to another application packet that the application packet directly depends on, and the downstream task is a deployment task corresponding to another application packet that directly depends on the application packet; and
the performing the plurality of deployment tasks according to the first dependency relationship includes:
for any one of the plurality of deployment tasks,
performing a dependency verification on the deployment task, wherein the dependency verification includes determining whether the upstream task of the deployment task has been completed, and when the upstream task has been completed, the dependency verification on the deployment task passes;
when the deployment task passes the dependency verification, performing the deployment task; otherwise, re-performing the dependency verification on the deployment task.

7. The method of claim 5, further comprising:
setting labels of the resources associated with the one or more template files as labels of the application deployment request, so as to facilitate query.

8. The method of claim 4, further comprising:
displaying the state of the instance to a user.

9. The method of claim 2, further comprising:
setting labels of the plurality of deployment tasks as labels of the application deployment request, so as to facilitate query.

10. The method of claim 1, wherein the method is applied to a Kubernetes platform.

11. The method of claim 1, wherein the first application packet depends on a plurality of second application packets, and the first dependency relationship further includes a second dependency relationship between the plurality of second application packets.

12. The method of claim 1 or 11, wherein the deploying the one or more second application packets and the first application packet according to the first dependency relationship includes:
converting the first dependency relationship into a tree structure, wherein a root node represents the first application packet, remaining nodes represent the one or more second application packets, and a child node of a non-leaf node represents another application packet that an application packet represented by the non-leaf node depends on;
grouping nodes according to heights of the nodes in the tree structure, the nodes in a same group having a same height; and
deploying the application packets represented by each group of nodes in sequence, wherein
for each group including a plurality of nodes, a plurality of application packets represented by the plurality of nodes in the group are deployed in parallel, and
application packets represented by a group with a relatively small node height are deployed preferentially.

13. A system for application deployment, comprising an acquisition module, a determination module, and a deployment module; wherein
the acquisition module is configured to obtain a first application packet to be deployed;
the determination module is configured to determine a first dependency relationship described in the first application packet, wherein the first dependency relationship indicates one or more second application packets that the first application packet depends on; and
the deployment module is configured to deploy the one or more second application packets and the first application packet according to the first dependency relationship.

14. The system of claim 13, wherein the obtaining a first application packet to be deployed includes: in response to an application deployment request initiated by a user, obtaining the first application packet; and
the deploying the one or more second application packets and the first application packet according to the first dependency relationship includes:
creating a plurality of deployment tasks, wherein each of the plurality of deployment tasks corresponds to each of the one or more second application packets and the first application packet; and
performing the plurality of deployment tasks according to the first dependency relationship.

15. The system of claim 14, wherein the system is configured for deploying an initial version or an upgraded version of the first application packet, or rolling back the first application packet to a historical version; and
the system further includes an instance generation module configured to generate an instance of the first application packet before the plurality of deployment tasks are created, the instance including at least one version change record of the first application packet.

16. The system of claim 15, wherein the instance further includes a state of the instance; and the system further includes a state update module configured to:
monitor state change messages of the plurality of deployment tasks;
in response to monitoring at least one state change message of one or more of the plurality of deployment tasks, update the state of the instance, the state of the instance indicating whether the plurality of deployment tasks have been completed.

17. The system of claim 16, wherein each of the plurality of deployment tasks includes one or more template files configured with parameters, each of the one or more template files is associated with resources, and the state change message of each of the plurality of deployment tasks is generated by:
monitoring state change messages of the resources associated with the one or more template files corresponding to the deployment task;
in response to monitoring at least one state change message of one or more of the resources associated with the one or more template files, generating the state change message of the deployment task, the state of the deployment task indicating whether the resources associated with the one or more template files are ready.

18. The method of claim 17, wherein each of the plurality of deployment tasks includes an application packet corresponding to the deployment task, a template file configured with parameters corresponding to the application packet, and at least one of an upstream task or a downstream task of the deployment task, wherein
the upstream task is a deployment task corresponding to another application packet that the application packet directly depends on, and the downstream task is a deployment task corresponding to another application packet that directly depends on the application packet; and
the performing the plurality of deployment tasks according to the first dependency relationship includes:
for any one of the plurality of deployment tasks,
performing a dependency verification on the deployment task, wherein the dependency verification includes determining whether the upstream task of the deployment task has been completed, and when the upstream task has been completed, the dependency verification on the deployment task passes;
when the deployment task passes the dependency verification, performing the deployment task; otherwise, re-performing the dependency verification on the deployment task.

19. A device for application deployment, comprising a processor, wherein the processor is configured to execute the method for application deployment of any one of claims 1-12.

20. A non-transitory computer-readable storage medium, comprising computer instructions that, when read by a computer, direct the computer to execute the method for application deployment of any one of claims 1-12.
